# EUROPEAN PATENT APPLICATION

(11) **EP 2 913 783 A1**
(43) Date of publication of application: **02.09.2015**
(21) Application number: 15156895.3
(22) Date of filing: 27.02.2015
(51) Int. Cl.: G06Q 10/00

(54) **Document sharing and collaboration**

(30) Priority: 28.02.2014 US 201414194302
(71) Applicant: Ricoh Company, Ltd., Tokyo 143-8555 (JP)
(72) Inventor: Luo, Guiluan, Cupertino, CA 95014-4150 (US); Nadkarni, Bhushan, Cupertino, CA 95014-4150 (US)
(74) Representative: Schwabe - Sandmair - Marx

(57) **Abstract**

Techniques are provided for sending, to an owner of a document, proposed modification data for the document. The proposed modification data comprises one or more modification proposals suggested for a particular portion of the document. In response to receiving, from the owner, an approval message for a first modification proposal, from the one or more modification proposals, a modified document is generated by modifying, using the first modification proposal, the particular portion of the document. The modified document is stored as a new version of the document. History data is generated by including the first modification proposal in the history data as an implemented modification; and, in response to determining that the one or more modification proposals comprise one or more modifications other than the first modification proposal, including the one or more modifications in the history data as non-implemented modifications.

## Description

### TECHNICAL FIELD

Embodiments relate generally to an approach for a document sharing and collaboration.

### BACKGROUND ART

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Documents are often shared among multiple users. The users who share a document usually have access to portions of the document or sometimes even the entire document. However, allowing the users to share the document may cause some managing problems. For example, it may be difficult to manage revisions of the document or track the authorship of the revisions.

Managing shared documents may be even more difficult when some of the revisions already implemented in a document are to be reverted and new revisions are to be implemented. For example, it may difficult to revert some of the already implemented revisions if it is difficult to determine which sections of the document were modified by which user.

### DISCLOSURE OF THE INVENTION

Techniques are provided for managing a document sharing and document collaboration. A document management system comprises one or more processors and one or more memories storing instructions which, when processed by the one or more processors, cause sending, to an owner of a document, proposed modification data for the document. The proposed modification data comprises one or more modification proposals suggested for a particular portion of the document. In response to receiving, from the owner of the document, an approval message for a first modification proposal, from the one or more modification proposals, a modified document is generated. The modified document is generated by modifying the particular portion of the document based on the first modification proposal. The modified document is stored as a new version of the document.

Furthermore, history data for a document is generated. The history data includes one or more modification proposals submitted by users for the document. If a particular modification proposal, of the one or more modification proposals, is used to modify the document, then the particular modification proposal is marked in the history data as an implemented modification. In response to determining that the one or more modification proposals comprise one or more modifications that have not been used to modify the document, such modifications are marked in the history data as non-implemented modifications.

### BRIEF DESCRIPTION OF THE DRAWINGS

In the drawings:
FIG. 1 is a block diagram that depicts an example arrangement for a document sharing and collaboration.
FIG. 2 is a block diagram that depicts example communications exchanged within a system implementing a document sharing and collaboration.
FIG. 3 is an example document modification and versioning scheme.
FIG. 4 is a flow diagram that depicts an approach for a document sharing and collaboration.
FIG. 5 is a flow diagram that depicts an approach for processing modification proposals.
FIG. 6 is a flow diagram that depicts an approach for submitting modification proposals.
FIG. 7 is a block diagram that depicts example communications exchanged between entities implementing an approach for a document sharing and collaboration.
FIG. 8 is a block diagram that depicts example communications exchanged between entities implementing an approach for a document sharing and collaboration.
FIG. 9 is an example of data structures utilized in an approach for a document sharing and collaboration.
FIG. 10 is an example of a user interface for accessing a document management system implementing a document sharing and collaboration.
FIG. 11 is an example of a user interface for accessing documents managed by a document management system implementing a document sharing and collaboration.
FIG. 12 is an example of a user interface for assigning access rights for documents managed by a document management system implementing a document sharing and collaboration.
FIG. 13 is an example of a user interface for displaying file collaboration details for a shared document.
FIG. 14 is a block diagram that illustrates a computer system upon which embodiments may be implemented.

### BEST MODE FOR CARRYING OUT THE INVENTION

In the following description, for the purposes of explanation, numerous specific details are set forth in order to provide a thorough understanding of the present approach. It will be apparent, however, that the present approach may be practiced without these specific details. In other instances, well-known structures and devices are shown in block diagram form in order to avoid unnecessarily obscuring the present approach.
1.0 OVERVIEW
2.0 DOCUMENT SHARING AND COLLABORATION SYSTEM ARCHITECTURE
   2.1 USERS AND OWNERS
   2.2 DOCUMENT MANAGEMENT SYSTEM
   2.3 STORAGE DEVICES
   2.4 EXAMPLE WORKFLOW
3.0 DOCUMENT MODIFICATION AND VERSIONING
4.0 DOCUMENT SHARING AND COLLABORATION
   4.1 INITIATING DOCUMENT SHARING
   4.2 PROCESSING MODIFICATION PROPOSALS
   4.3 SUBMITTING MODIFICATION PROPOSALS
   4.4 FIRST EXAMPLE WORKFLOW
   4.5 SECOND EXAMPLE WORKFLOW
   4.6 EXAMPLE DATA STRUCTURES
   4.7 EXAMPLE USER INTERFACES
5.0. IMPLEMENTATION MECHANISMS

### 1.0 OVERVIEW

An approach is provided for a document sharing and collaboration. The approach may be implemented in a document sharing and collaboration system or any other system configured to manage a document sharing, document modifications and document versioning.

Document sharing and collaboration system may be configured to communicate with owners of shared documents and users who share the documents. The system may manage access rights to the shared documents, and manage modification proposals submitted for the documents. The systemmay also be configured to keep track of the access rights assigned to the documents, and keep track of the modifications submitted for the documents. Furthermore, the system may facilitate reverting of the modifications that have been implemented in the shared documents, and implementing other modifications in the documents.

Document sharing and collaboration system may allow an owner of a document to access the system and use the system to determine the terms for sharing the document with other users. Accessing the system may be facilitated by providing a Uniform Resource Locator (URL) of a webpage portal of the document sharing and collaboration system. Once the owner selects URL and accesses the portal, the owner may be prompted to provide authorization and authentication credentials. Then, a menu may be displayed for the owner. The menu may provide options for selecting a document to be shared, options for selecting portions of a document to be shared, options for selecting users who may share the document, and other options.

Document sharing and collaboration system may allow an owner of a document to determine access rights to various portions of the document and for various users, and associate the access rights with the document or users. The access rights and the associations between the access rights, the documents and the users may be changed or modified.

Furthermore, a document sharing and collaboration system may allow an owner of a document to retrieve and review modification proposals submitted by users who share the document. The modification proposals may pertain to the entire document or portions of the document. Upon receiving an indication from the owner that a particular modification proposal is to be implemented, the particular modification proposal may be implemented in the document.

Document sharing and collaboration system may be configured to generate history data for a shared document. The history data may comprise metadata associated with modification proposals. For example, if a particular modification proposal has been used to modify a shared document, then the particular modification proposal may be marked in the history data as "implemented modification," or using any other marking communicating that the particular modification proposal has been implemented. However, if a particular modification proposal has been proposed, but has not been implemented, then the proposal may be marked in the history data as "non-implemented modification," or using any other similar marking.

Document sharing and collaboration system may also receive, from an owner of a document, a modification rejection message. The rejection message may indicate that a particular modification proposal has been rejected by the owner of the document. In response to receiving the rejection message, the system may modify history data associated with the document by indicating that the particular modification proposal is a non-implemented modification.

Document sharing and collaboration system may receive, from an owner of a document, a modification reconsideration message. The reconsideration message may comprise a reconsidered modification proposal (or an identifier of such a proposal), selected from the modification proposals stored in history data associated with the document, and marked in the history data as a "non-implemented modification." The reconsideration message may also include identifiers of proposals that the owner wishes to have reverted. In response to receiving the reconsideration message, the system may cause a reversal of the modifications are to be reverted, initiate implementing the reconsidered modification proposal, mark the reverted modification proposals as "non-implemented," and mark the reconsidered proposal as "implemented."

Document sharing and collaboration system may receive, from an owner of a document, a metadata request for providing metadata for the document. The metadata may be included in a history data file associated with the document, and may comprise file identification data and user access rights data associated with the document. For example, the system may receive a metadata-update message that comprises file identification data modifications for the file identification data associated with the document. In response to receiving such a message, the system may use the file identification data modifications to modify the file identification data included in the metadata. The system may also receive a metadata-update message that comprises user access rights modifications for the user access rights data associated with the document. In response to receiving such a message, the system may use the user access rights modifications to modify the user access rights data included in the metadata.

Document sharing and collaboration system may allow users who wish to collaborate on a shared document to access the system and request access to the shared document or portions of the shared document. Accessing the system may be facilitated by providing URL of a webpage portal of the document sharing and collaboration system. Once a user (collaborator) selects the URL and accesses the portal, the user may be prompted to provide authorization and authentication credentials, and, if the provided credentials are valid, then a menu of the shared documents may be displayed for the user. Once the user selects a particular shared document, the system may retrieve access rights associated with the document, and using the access rights, determine the portions of the document that may be downloaded for the user.

Document sharing and collaboration system may allow users to submit modification proposals for a shared document. A user, who has been granted access to a shared document, or a portion of the shared document, may submit modification proposals to the document sharing and collaboration system. The modification proposals may be then transmitted to an owner of the document. The owner may determine whether any of the modification proposals may be implemented in the document. Upon receiving a decision from the owner, the document sharing and collaboration system may initiate implementing of the approved modification proposals. The system may also generate and transmit to the user a communication indicating the decision.

### 2.0 DOCUMENT SHARING AND COLLABORATION SYSTEM ARCHITECTURE

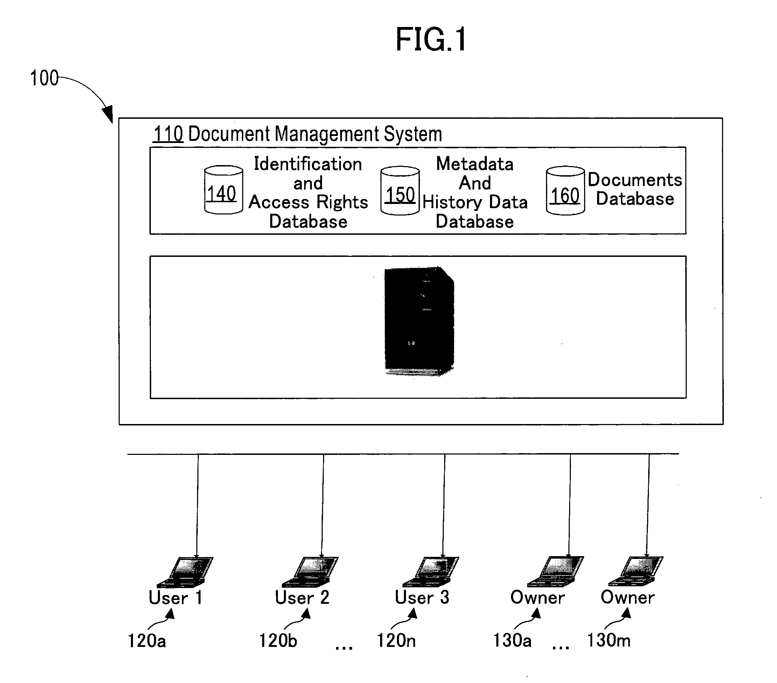

FIG. 1 is a block diagram that depicts an example arrangement 100 for a document sharing and collaboration. The depicted arrangement 100 is merely one of many possible arrangements; other arrangements are also described herein.

Arrangement 100 comprises document management system 110, and a plurality of storage devices 140, 150 and 160. Document management system 110 may communicate with one or more user devices 120a ... 120n, and one or more document owner devices 130a ... 130m.

### 2.1 USERS AND OWNERS

User devices 120a ... 120n and owner devices 130a ... 130m may be implemented as any type of devices equipped with wireless-communication capabilities, capabilities to generate, display and interact with a graphical user interface, capabilities to access the Internet, and other capabilities specific to the data communication technology.

For simplicity, user devices 120a ... 120n may be also referred to as users 120a ... 120n. Similarly, owner device 130a ... 130m may be also referred to as owners 130a ... 130m.

In some circumstances, an owner, of owners 130a ... 130m, of a shared document may also be a user, or a collaborator, of the shared document. Similarly, in some circumstances, a user, of users 120a ... 120n, of a shared document may also be an owner of the shared document.

Owners 130a ... 130m may access document management system 110, and determine one or more shared documents that the owners wish to share with one or more users 120a ... 120n. Owners 130a ... 130m may also determine to which sections/chapters/portions/pages of a shared document each of the users may have access, and create and modify access rights to the shared documents and for the users. A section of a shared document may include a page, a few pages, a drawing, a few drawings, or other components of the shared document. A chapter of a shared document may include a chapter that is identifiable in the shared document by a chapter name or a chapter reference. A portion of a document may include any portion of the shared document that may be identifiable in the shared document.

Owners 130a ... 130m may also retrieve, review, accept, reject and/or reconsider modification proposals submitted by users 120a ... 120n who share the documents. For example, an owner 130a may access document management system 110, select the modification proposals for a shared document that owner 130a wishes to have implemented, and requests that the selected modification proposals be implemented. Once the approved modification proposals are implemented, system 110 may mark those proposals as "implemented."

Owners 130a ... 130m may also indicate the modification proposals for a shared document that are not to be implemented, and cause document management system 110 to mark those proposals as "non-implemented."

Users 120a ... 120n may access document management system 110, select documents that users 120a ... 120n may access, review the shared documents, and submit modification proposals for the shared documents. For example, a user 120a may submit multiple modification proposals for those sections/chapters/portion of a shared document that user 120a is allowed to modify. If user 120a attempts to submit a modification proposal to a section of a shared document that the user is not allowed to modify, then document management system 110 may issue an error notification or a warning message to the user to notify the user of an access right violation. Furthermore, document management system 110 may transmit an error notification or a warning message to an owner of the shared document. In response to receiving such a message, the owner may reconsider the access rights for the shared document, or reaffirm the error notification for the user.

### 2.2 DOCUMENT MANAGEMENT SYSTEM

Document management system 110 is configured to manage a document sharing, document modifications and document versioning. For example, document management system 110 may manage access rights to shared documents, and manage modification proposals submitted for the shared documents. Document management system 110 may also be configured to keep track of the access rights, and keep track of the modifications that have been implemented and the modification that have been proposed, but not implemented. Furthermore, document management system 110 may facilitate reverting of the modifications that have been implemented in a shared document, and implementing other modifications in the document instead.

Document management system 110 may be configured to communicate with owners 130a ... 130m of shared documents and users 120a ... 120n who share the documents. For example, document management system 110 may receive, from owners 130a ... 130m, messages containing selections of documents that are to be shared with users 120a ... 120n. Document management system 110 may also receive, from owners 130a ... 130m, messages containing data indicating access rights to the shared documents for each of users 120a ... 120n. Furthermore, document management system 110 may receive, from owners 130a ... 130m, messages containing requests to implement certain modification proposals in the shared documents, and requests to not implement other modification proposals in the shared documents.

Document management system 110 may receive, from users 120a ... 120n, modification proposals for shared documents. Document management system 110 may store the received modification proposals in storage device 150, or any other storage device available to document management system 110. The system may also retrieve the stored modification proposals, transmit them to owners 130a ... 130m for review, receive decisions from owners 130a ... 130m, and cause implementing the decisions received from the owners.

Document management system 110 may also manage databases implemented in storage devices including storage devices 140, 150, and 160, described in detail below.

### 2.3 STORAGE DEVICES

Referring again to FIG. 1, in an embodiment, document management system 110 cooperates with one or more storage devices managing and maintaining a plurality of databases. Non-limiting examples of the databases include an identification and access rights database implemented in storage device140, a metadata and history data database implemented in storage device 150, and a document database implemented in storage device 160.

Storage devices 140, 150 and 160 depicted in FIG. 1 are merely examples of the storage devices utilized by, and accessible to, document management system 110. Other storage devices, although not depicted in FIG. 1, may also be included in arrangement 100.

Storage device 140 may be configured to store identification and access rights data. Access rights may be determined and modified by owners 130a ... 130m of shared documents, and may be associated with the shared documents and/or users 120a ... 120n. The access rights and access rights associations may be stored in one or more devices, including storage device 140.

Storage device 150 may be configured to store metadata, history data and data logs associated with shared documents. Metadata for a shared document may comprise file identification data, user access rights data associated with the document, and history data. Contents of the metadata may be determined, modified and deleted by owners 130a ... 130m, or a system administrator of document management system 110. File identification data may include information about a shared document, sections/chapters/portions of the shared document, and other document-related information. User access rights data may include information about access rights granted to users 120a ... 120n to a shared document, and sections/chapters/portions of the shared document.

History data for a shared document may comprise modification proposals submitted by users 120a ... 120n for the shared document. If a particular modification proposal has been used to modify the shared document, then the particular modification proposal may be marked in the history data as an "implemented modification." However, if a particular modification proposal has been proposed, but has not been implemented, then it may be marked in the history data as a "non-implemented modification."

Data logs associated with shared documents may be included in history data associated with the shared documents, or may be implemented separately from the history data. For a shared document, a data log may include chronologically recorded entries pertaining to the modification proposals that have been implemented in the shared document, the modification proposals that have been rejected, the modification proposals that have been reconsidered, and other modification-related entries. If users are allowed to modify sections/chapters/portions of a shared document, then a data log may be created and maintained for each section/chapter/portion of the shared document.

Data logs may be cross-referenced using various mechanisms to provide searching capabilities. For example, the data logs may be searchable based on identifiers of the shared documents, sections of the shared documents, chapters of the shared documents, and the like. The data logs may also be searchable based on identifiers of users who have access to the shared documents, owners who own the shared documents, and the like.

Storage device 160 may be used for storing document files, including the files of shared documents.

In an embodiment, one or more storage devices 140, 150 and 160 are implemented in a cloud service. A "cloud" is a computing system communicatively coupled to document management system and configured to provide processing power, storage, processing and other computing services to document management system 110, users 120a ... 120n, and owners 130a ... 130m often via a web browser. Services offered by a cloud may be accessible via the Internet using any of the data communications protocols, such as the Transmission Control Protocol (TCP), the Internet Protocol (IP), and other protocols. Each of the services in the cloud may be associated with a different communications protocol, a different IP address and/or port number.

Cloud may be maintained by a single individual user or an organization, such as a company, an association, a university, or other entity. Non-limiting examples of cloud services include an optical character recognition (OCR) services for converting document data from one format to another. Other services may include database management, content-searches, and the like.

### 2.4 EXAMPLE WORKFLOW

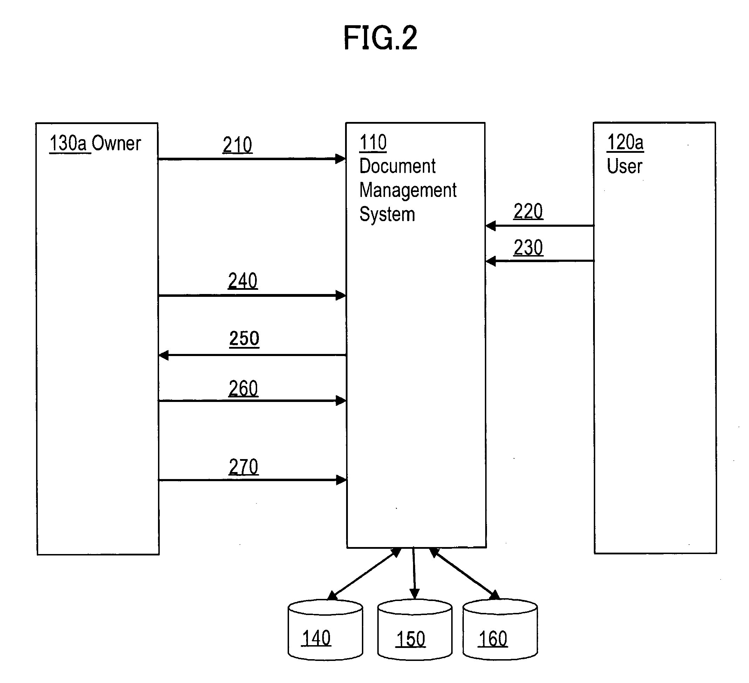

FIG. 2 is a block diagram that depicts example communications exchanged within a system implementing a document sharing and collaboration. The example communications are depicted merely to illustrate one or many communications scenarios that may occur in a document sharing and collaboration arrangement.

The depicted example shows one owner 130a, one document management system 110, one user 120a, and storage devices 140, 150 and160. However, other examples may include a plurality of owners 130a ... 130m, a plurality of users 120a ... 120n, and additional storage devices. Furthermore, other examples may include a distributed system implementing document management system 110.

In the depicted example, owner 130a may send a request 210 to document management system 110 to access system 110. Various implementations of facilitating access to document management system 110 are described below. Upon a successful authentication to document management system 110, owner 130a may indicate to document management system 110 that owner 130a wishes to share a document with user 120a, and determine access rights for the shared document. Access rights may be stored in storage device 140. Metadata and history data associated with shared documents may be stored in storage device 150. Document files may be retrieved and stored in storage device 160.

Once access rights for a shared document are established and assigned to user 120a, user 120a may send a request 220 to document management system 110 to access system 110. Upon a successful authentication to document management system 110, user 120a may access the shared document and review the shared document. The access may be granted to the entire shared document, or to certain sections/chapters/portions of the shared document. The shared document, or portions of the shared document, may be downloaded from storage device 160 to a device of user 120a.

If user 120a determines one or more modification proposals 230 for a shared document, then user 120a may transmit the modification proposals 230 to document management system 110. User 120a may submit one or more modification proposals 230 to each of the portion/sections of the shared document that user 120a is allowed to modify. The modification proposals 230 may be stored in storage device 150 (or any other storage device), and may be retrieved from storage device 150 upon receiving a request from owner 130a or receiving any other request from document management system 110.

Owner 130a may send a request 240 to document management system 110 to retrieve one or more modification proposals 230 that have been submitted by user 120a, or other users 120b ... 120n, for a shared document. In response to receiving request 240, document management system 110 may retrieve one or more modification proposals from storage device 150, and transmit the proposals 250 to owner 130a.

Owner 130a may review modification proposals 250 and decide whether any of them is to be implemented in a shared document. For example, if modification proposals 250 include four proposals, and owner 130a determines that two of the modification proposals 250 are to be implemented, then owner 130a may send a message 260 to document management system 110 to indicate the modification proposals that have been approved for implementation and the modification proposals that have been rejected.

A modification proposal may be identified in message 260 by a modification proposal identifier, references to proposal authorship information, and/or proposal-time information of the proposal. For example, for a particular modification proposal (that is either to be revoked or implemented) message 260 may include a modification proposal identifier, a user identifier of user 120a, a document/section identifier of the document/section to which the proposal is applicable, and a timestamp information that indicates the time when user 120a submitted the modification proposal. Other methods of identifying a modification proposal may also be implemented.

Upon receiving message 260, document management system 110 may access history data associated with a shared document and stored in storage devices, such as storage device 150. Using contents of message 260, document management system 110 may associate certain markings with the modification proposals identified in message 260. For example, the modification proposals identified in message 260 as "to be implemented, " may be marked in the history data as "implemented modifications," while the modification proposals identified in message 260 as "not to be implemented," may be marked in the history data as "non-implemented modifications."

Furthermore, upon receiving message 260, document management system 110 may initiate, or otherwise cause initiating an implementation of the modification proposals identified as "to be implemented" in a shared document.

As the modification proposals are implemented in the shared document, a log of the modifications implemented in the shared document may be modified to capture information about the implementation of the modifications. The log may include information indicating a modification proposal identifier, an author of the modification proposal, the time the modification proposal was submitted to document management system 110, an identifier of the section/chapter/portion of the shared document to which the proposed modification pertains, the time the modification proposal was submitted to owner 130a, the time the modification proposal was approved by owner 130a, the time the modification proposal was implemented in the shared document, and other implementation-dependent information.

In some situations, owner 130a may reconsider their decision regarding implementing or not implementing certain modification proposals. For example, owner 130a may determine that even though a particular modification proposal has been already implemented in a shared document, upon reconsideration, owner 130a may determine that the implementation of the particular modification proposal is to be reverted, and another modification proposal is to be implemented in the shared document instead. To indicate the reconsideration decision, owner 130a may transmit a message 270 to document management system 110.

Message 270 may include an indication of one or more modification proposals that are to be reversed in a shared document, and one or more modification proposals that are to be implemented in the shared document instead. The proposals may be identified by their identifiers, references to authorship information, and/or time-related information. For example, for a particular modification proposal (that is either to be revoked or implemented) message 270 may include a modification proposal identifier, a user identifier of user 120a, a document/section identifier of the document/section to which the proposal is applicable, and a timestamp information that indicates the time when user 120a submitted the modification proposal. Other methods of identifying a modification proposal may also be implemented.

Upon receiving message 270 including a reconsideration decision regarding a shared document, document management system 110 may parse contents of message 270, and determine the modification proposals that are to be reversed and the modification proposals that are to be implemented instead. The respective identifications may be used to search data logs associated with the shared document, and the details of the respective proposals may be retrieved. Document management system 110 may initiate a process of reverting those modifications that owner 130a wishes to have reverted, and initiate a process of implementing those modifications that owner 130a wishes to have implemented instead. Upon completing the reverting and implementing processes, document management system 110 may update data logs associated with the shared document to include the related log information. Furthermore, document management system 110 may access history data associated with the shared document, and mark in the history data the revered modification proposals as "non-implemented," and the implemented modification proposals as "implemented."

Document management system 110 may also be configured to perform other task and functions, which are described below in detail.

### 3.0. DOCUMENT MODIFICATION AND VERSIONING

In an embodiment, an implementation of a document sharing and collaboration approach includes an implementation of a document modification and versioning scheme. The scheme allows tracking of the modifications for shared documents, and tracking versions of the modified shared documents.

Document modification and versioning scheme may be implemented in a document management system, including an example document management system 110 depicted in FIGS. 1-2. The document modification and versioning scheme may be configured to access data stored in storage devices managed by document management system 110.

Document modification and versioning scheme may be used to implement various lock schemes to control access to shared document while the documents are modified. In particular, the scheme may be used to control access to a portion of the shared document and permit implementing one modification proposal to the portion at the time. For example, if a particular portion of a shared document is to be modified using a particular modification proposal, then a lock may be created and assigned to the particular portion to prevent modifying the particular portion using another modification proposal. Upon completing an implementation of the particular modification proposal, the lock may be released to allow implementations of other modification proposals for the particular portion. Other types of lock schemes may also be implemented and utilized by the document modification and versioning scheme.

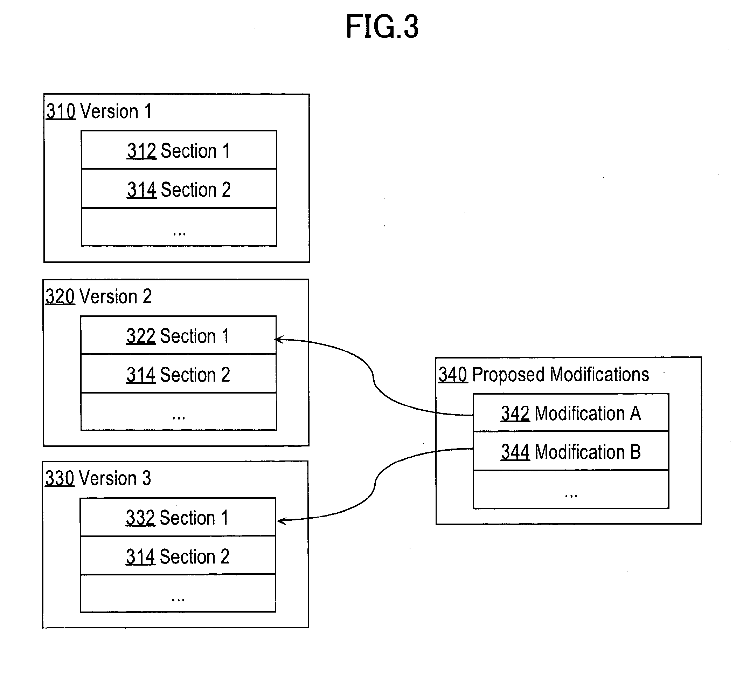

FIG. 3 is an example document modification and versioning scheme. The example is provided merely to illustrate a process of implementing one or more modification proposals for a shared document and a process of generating versions of the shared document. Other schemes for tracking the modifications and versions of shared documents may also be implemented.

In the depicted example, a shared document is originally assigned a first version 310. First version 310 of the shared document may comprise a plurality of sections, including a first section 312 and a second section 314. As the shared document is modified using proposed modifications 340, new versions of the shared document are generated.

Various versions of the shared document may be stored in a document database. Such a database may be implemented in a storage device 160, depicted in FIG. 1.

Proposed modifications 340 to a shared document may be stored in a metadata and history data database. Such a database may be implemented in a storage device 150, depicted in FIG. 1.

Document modification and versioning scheme may be implemented for an entire shared document, and/or for each of the sections of the shared document. If the scheme is implemented for the entire shared document, then a new version of the shared document may be generated each time any of the sections of the shared document is modified. If the scheme is implemented for each of the sections of the shared document, than a separate versioning scheme may be maintained for each of the sections of the shared document, and a new version of a section is generated only if the section is modified.

In the example depicted in FIG. 3, a document modification and versioning scheme is implemented for an entire document. Upon receiving a message from an owner of a shared document indicating that the owner approved a modification "A" 342 for a first section 312 of the shared document, a lock may be created and associated with either the entire shared document, or first section 312 of the shared document. Once the shared document (or first section 312 of the shared document) is "locked, " modification "A" 342 may be implemented in first version 312, and a second version 320 of the shared document may be created. Second version 320 may include a modified first section 322, and a second section 314, which has not been modified. Second version 320 of the shared document may be stored in a document database, and the lock issued on the shared document (or the first section) may be released.

Upon implementing a modification "A" 342, a log associated with a shared document may be updated to indicate that the modification "A" has been implemented.

Upon receiving a message from an owner of a shared document indicating that the owner approved a modification "B" 344 for a first section 322 of a second version 320 of the shared document, a lock may be created and associated with either the entire shared document, or first section 322 of the shared document. Once the shared document (or first section 322 of the shared document) is "locked, " modification "B" 344 may be implemented in first version 322, and a third version 330 of the shared document may be created. Third version 330 may include a modified first section 332, and a second section 314, which has not been modified. Third version 330 may be stored in a document database, and the lock issued on the shared document (or the first section) may be released.

Upon implementing a modification "B" 344, a log associated with a shared document may be updated to indicate that the modification "B" has been implemented.

Process of implementing proposed modifications 340 in a shared document may be repeated for each of the proposed modifications 340, and a new version of the shared document may be created.

As described above, a document modification and versioning scheme may be implemented for an entire shared document or for each section of the shared document. Therefore, new versions of the shared document may be generated when any of the sections of the shared document are modified, or new versions of a section of the shared document may be generated when the section of the shared document is modified.

Log data may be updated each time a new version of a shared document or a new version of a section of the shared document is generated. The log data may include an identifier of the implemented modification proposal, an identifier of the user who proposed the implemented modification proposal, and other time-related information described above.

### 4.0 DOCUMENT SHARING AND COLLABORATION

### 4.1 INITIATING DOCUMENT SHARING

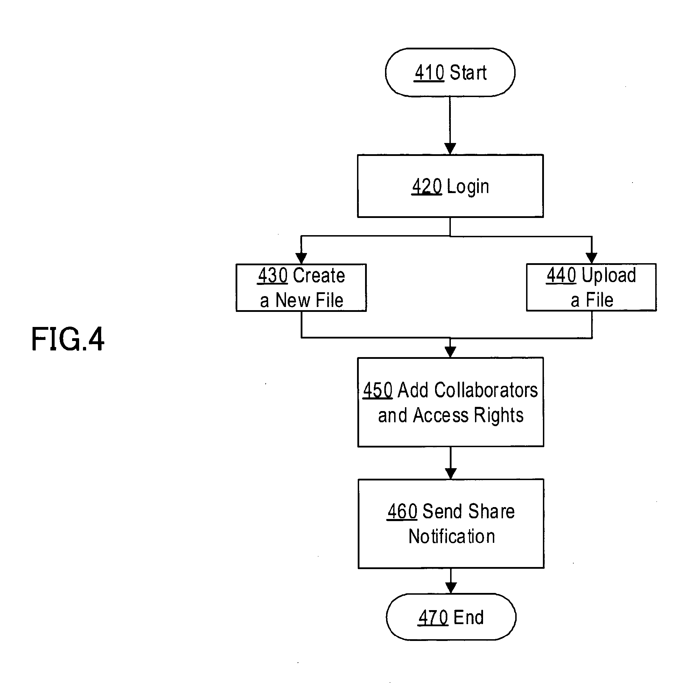

FIG. 4 is a flow diagram that depicts an approach for a document sharing and collaboration. In an embodiment, the steps depicted in FIG. 4 are performed by one or more applications executed on a device of a user who wishes to share a document.

In step 410, a user starts the process of accessing a document management system.

In step 420, a user logins to a document management system to obtain access to the system and to determine terms for sharing one or more documents with other users. A user may log in to the system using a graphical user interface (GUI) displayed on the user device.

Accessing the system may be facilitated by providing a Uniform Resource Locator (URL) of a webpage portal of the document sharing and collaboration system. Once the user selects the URL and accesses the portal, the user may be prompted to provide authorization and authentication credentials, and if the provided credentials are valid, then a menu including various options may be displayed for the user. For example, one option of the menu may indicate that the user may create a new file, and another option of the menu may indicate that the user may upload an already created file. The menu may provide other options to the user.

In step 430, a user selects an option for creating a new file. In response to that selection, a data processing application may be launched on a user device to allow the user to create a new document, and store the new document in a document database or other database or storage available to the user.

Alternatively, in step 440, a user selects an option for uploading an existing file. In response to that selection, a data processing application may be launched on a user device to allow the user to upload an already created document. The document may be retrieved from a document database, or other database or storage available to the user.

In step 450, a user adds collaborators and access rights. For example, the user may specify one or more collaborators who may collaborate on a shared document. The collaborators may be specified using user identifiers, user aliases, and the like.

A user may also assign access rights to a shared document and to collaborators. For example, the user may determine which sections of the shared document may be accessed and/or modified by which collaborators. One or more sections may be accessed by the same collaborator, and one or more collaborators may access the same section. In some implementations, some collaborators may access/modify the entire shared document, while other collaborators may access/modify only certain sections of the shared document.

Collaborators may be given various levels of access to a shared document. For example, a collaborator may be allowed to "read" a portion of a shared document, but not "write" (or modify) that portion. Another collaborator may be allowed to "read" and "write" a portion of the shared document, but not "delete" that portion. Other collaborator may be allowed to "read," "write," and "delete" one portion of the shared document, but only "read" another portion of the shared document. Other possible combination of the "read," "write," and "delete" access rights may be also implemented.

In step 460, a user may send a share-notification to collaborators. The share-notification may include an identification of a shared document, identifications of the portions of the shared document that are to be shared by the collaborators, and access rights to the portions and for the collaborators.

In step 470, a user ends the process of accessing a document management system. The process of accessing a document management system may be repeated multiple times during one session, or separate sessions may be initiated for determining shared documents and access rights for the documents.

### 4.2 PROCESSING MODIFICATION PROPOSALS

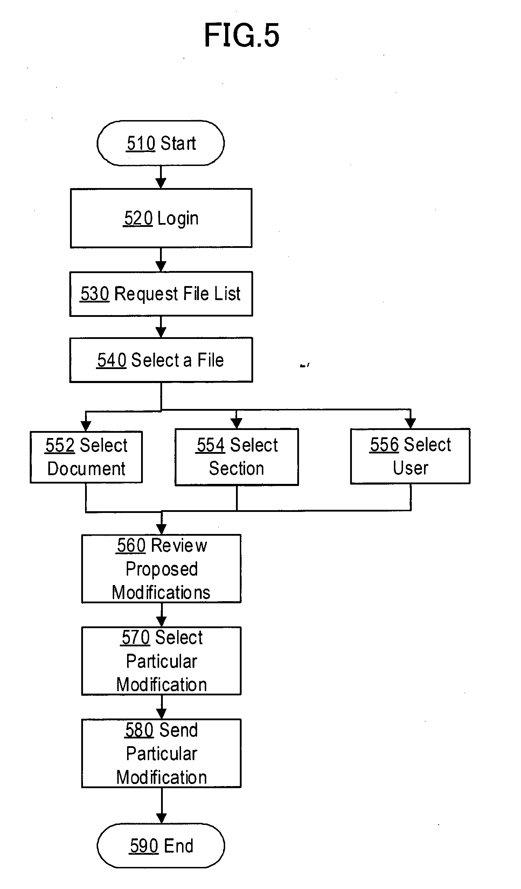

FIG. 5 is a flow diagram that depicts an approach for processing modification proposals. In an embodiment, the steps depicted in FIG. 5 are performed by one or more applications executed on a device of an owner of a shared document.

In step 510, an owner starts the process of accessing a document management system. The owner may use a GUI displayed on a user display device, or any other type of interface that allows the owner to communicate with the document management system.

In step 510, an owner logins to a document management system. Once the owner selects URL and accesses a portal of the document management system, the owner may be prompted to provide authorization and authentication credentials. If the provided credentials are valid, then a menu including various options may be displayed for the owner. For example, the menu may provide an option for selecting a document to be shared, an option for selecting portions of a document that may be shared, and an option for selecting access rights for users who may share the document.

In step 530, an owner requests a file list from a document management system. A file list may include identifiers of one or more documents that the owner is sharing with other users. Upon receiving the request from the owner, the document management system may retrieve the list of the shared documents and display the list on a display device that the owner is using.

In step 540, using a GUI, an owner selects a file containing a shared document. Upon selecting the file, the owner may be presented with a menu. The menu may have several options. For example, one option may allow the owner to indicate that the owner wishes to review modification proposals submitted for the shared document. Another option may allow the owner to indicate that the owner wishes to review modification proposals submitted for a particular section of the shared document. Other option may allow the owner to select modification proposals submitted by a particular collaborator.

In step 552, an owner indicates that the owner wishes to review modification proposals submitted for a shared document. In this step, a message may be sent to a document management system to retrieve one or more modification proposals that have been submitted by users for the shared document.

In step 554, an owner indicates that the owner wishes to review modification proposals submitted for a particular section of the shared document. The particular section may be identified by entering a section identifier, a section name, or the like to the system using a GUI. In this step, a message may be sent to a document management system to retrieve one or more modification proposals that have been submitted by users for the particular section of the shared document.

In step 556, an owner indicates that the owner wishes to review modification proposals submitted by a particular collaborator. The particular collaborator may be identified by a user identifier, a user name, or the like, entered into the system using a GUI.

In step 560, requested modification proposals are displayed for an owner, and the owner reviews the proposals. Depending on whether the owner performed the step 552, 554 or 556, the displayed modification proposals may pertain to proposals for the entire shared document, to proposals for a particular section of the shared document, or to proposals submitted by a particular user.

In step 570, an owner selects a particular modification proposal and indicates whether the particular modification proposal is to be implemented in a shared document, is to be rejected, or is to be reconsidered.

In step 580, an owner sends a message containing a particular modification proposal and instructions. The instructions may indicate whether the particular modification proposal is to be implemented in a shared document, is to be rejected, or is to be reconsidered.

In step 590, an owner ends processing modification proposals. The processing of the modification proposals may be repeated multiple times during one session, or separate sessions may be initiated for each review of the modification proposals.

### 4.3 SUBMITTING MODIFICATION PROPOSALS

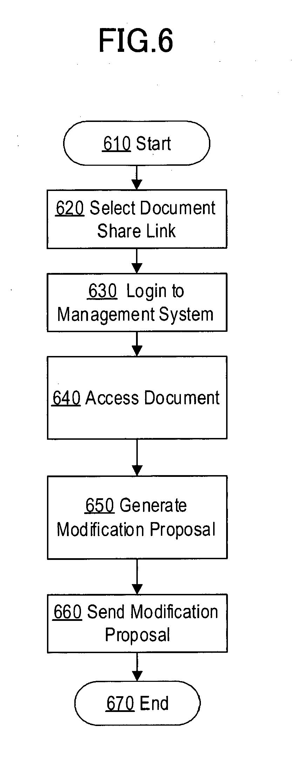

FIG. 6 is a flow diagram that depicts an approach for submitting modification proposals. In an embodiment, the steps depicted in FIG. 6 are performed by one or more applications executed on a device of a user who is granted access rights to a shared document. For simplicity, it is assumed that the user is allowed to modify the entire shared document. However, in other embodiments, the user may be allowed to modify only one or more sections of the shared document. In other embodiments, the user may be allowed to merely view the document, or only view certain sections of the shared document.

In step 610, a user starts the process of accessing a document management system.

In step 620, a user selects a document-share link to access a document management system. For example, the user may use a GUI displayed on a user display device, or any other type of interface that allows the user to communicate with the document management system.

In step 630, a user logins to a document management system. The user may be prompted to provide authorization and authentication credentials, and if the provided credentials are valid, then a menu including various options may be displayed for the user. For example, the menu may provide an option for selecting a shared document that the user wishes to access.

In step 640, a user accesses a shared document. Depending on access rights associated with the user and the shared document, the user may be allowed to access the entire shared document, or just certain sections of the shared document. The user reviews the shared document (or the sections of the shared document), and determines whether the user wishes to modify the shared document.

In step 650, a user generates a modification proposal for a shared document or a portion of the shared document. A modification proposal may include identification of the portion which the user wishes to modify, and a description of how the portion of the shared document is to be modified. For example, a modification proposal may include a line number of a text line in the shared document, and a description of how the text line is to be modified. The description may be represented using a "tracked changes" option notation, or the text to be deleted may be marked as crossed out and the text to be added may be marked as underlined.

In step 660, a user sends a modification proposal to a document management system. Upon receiving the modification proposal, the document management system may generate an identifier for the modification proposal, associate the identifier with the modification proposal and store the modification proposal in a metadata and history data database, or any other database.

In step 670, a user ends submitting modification proposals. The submitting of the modification proposals may be repeated multiple times during one session, or separate sessions may be initiated for each submission of a modification proposal.

### 4.4 FIRST EXAMPLE WORKFLOW

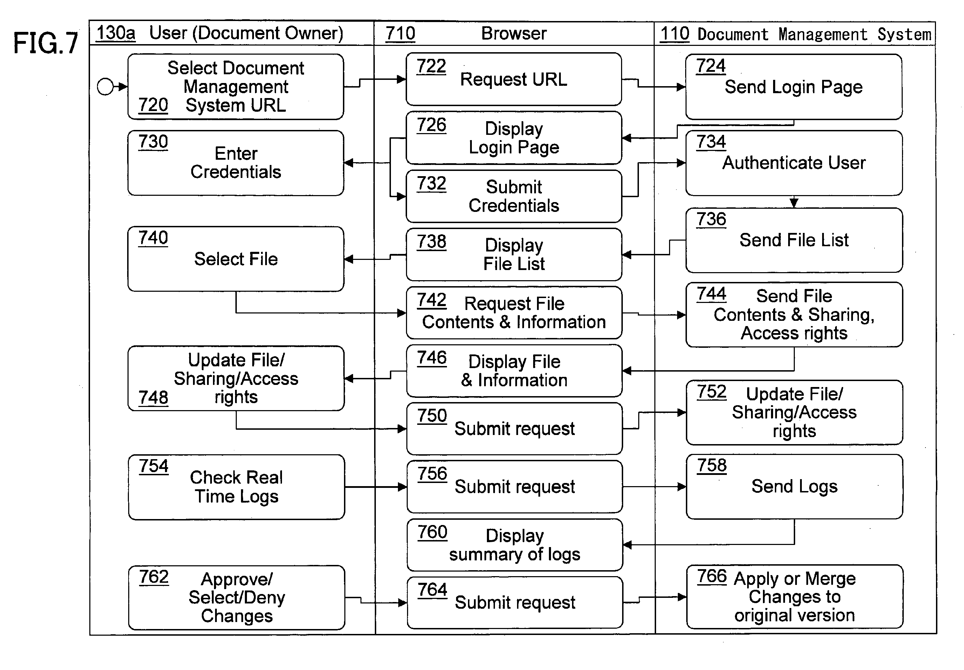

FIG. 7 is a block diagram that depicts example communications exchanged between entities implementing an approach for a document sharing and collaboration. In the depicted example, an owner 130a of a shared document uses a browser 710 to communicate with a document management system 110.

In step 720, user 130a selects URL of document management system 110.

In step 722, browser 710 uses URL of document management system 110 to establish a connection between a user session of user 130a and document management system 110.

In step 724, document management system 110 sends to browser 710 data representing a login page of a portal of document management system 110.

In step 726, browser 710 displays a login page of a portal of document management system 110 on a display device of user 130a.

In step 730, user 130a enters authentication and authorization credentials to a login page of document management system 110, and in step 732, browser 710 submits the user credentials to document management system 110.

In step 734, document management system 110 uses the received credentials of user 130a to authenticate user 130a to document management system 110.

Upon a successful authentication of user 130a to document management system 110, in step 736, document management system 110 sends a file list of documents to browser 710.

In step 738, browser 710 displays a file list of documents for user 130a.

In step 740, user 130a views a displayed file list, and selects an item from the file list. The select item may correspond to an identifier of a particular document that user 130a wishes to share with other users.

In step 742, browser 710 receives an item selection from user 130a, and requests file contents of the selected document and metadata associated with the selected document.

In step 744, document management system 110 retrieved the requested file contents and metadata for a selected document, and transmits them to browser 710. The metadata may include access rights already created and associated with the selected document.

In step 746, browser 710 displays file contents and metadata of a selected document for user 130a.

In step 748, user 130a reviews file contents and metadata of a selected document, and determines whether the entire document or any portions of the document may be shared with other users. Furthermore, user 130a determines one or more collaborators with whom the document may be shared. Moreover, user 130a may update access rights associated with the document to indicate the portions of the document that are to be shared with the user, and to indicate the collaborators who may share the portions of the document.

In step 750, browser 710 transmits to document management system 110 a request to update access rights associated with a shared document.

Upon receiving a request to update access rights associated with a shared document, in step 752, document management system 110 uses the information included in the request to update the access rights data, and stores the updated access rights data in an identification and access rights database, or any other database.

Steps 720-752 may be repeated multiple times and each time user 130a wishes to review and/or modify a list of documents to be shared and access rights associated with the shared documents.

Steps 754-766 may be performed when user 130a wishes to review modifications proposed to a shared document, and to determine and select a proposed modification to be implemented in the shared document.

In step 754, user 130a requests real-time logs associated with a shared document. The logs may include data representing one or more modification proposals that have been proposed by collaborators for the shared document.

In step 756, browser 710 transmits a request for real-time logs for a shared document to document management system 110.

In step 758, document management system 110 receives a request for real-time logs for a shared document, determines one or more logs associated with the shared document, and transmits the logs to user 130a.

In step 760, browser 710 displays logs associated with a shared document, and allows user 130a to review the logs. The logs may include data representing one or more modification proposals that have been proposed by collaborators for the shared document.

In step 762, user 130a reviews the modification proposals and determines whether any of the proposed modifications are to be implemented in a shared document. For example, a log may include information indicating that two modification proposals have been submitted for the shared document. User 130a may review the proposals and determine that the first of the two proposals is to be implemented in the shared document. The decision made by user 130a may be communicated in step 764 by browser 710 to document management system 110.

In step 766, document management system 110 receives a request to implement a particular modification proposal in a shared document. Document management system 110 may retrieve the details of the particular modification proposal from a metadata and history data database, and initiate an implementation of the particular modification proposal in the shared document. For example, document management system 110 may perform the modification instructions included in the particular modification proposal and merge the changes specified by the instructions with the contents of the shared document.

### 4.5 SECOND EXAMPLE WORKFLOW

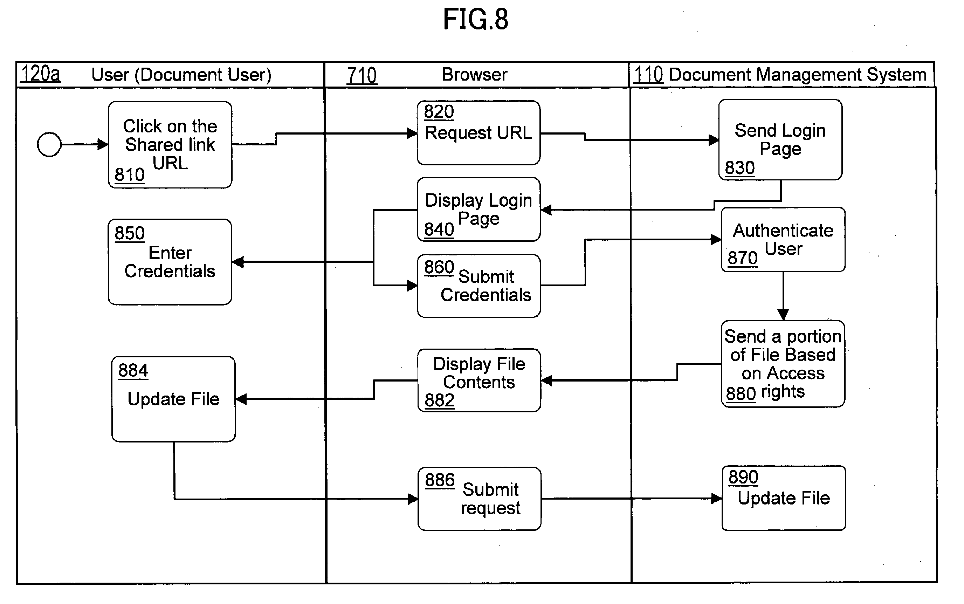

FIG. 8 is a block diagram that depicts example communications exchanged between entities implementing an approach for a document sharing and collaboration. In the depicted example, a user 120a (collaborator) uses a browser 710 to communicate with a document management system 110.

In step 810, user 120a selects URL of document management system 110.

In step 820, browser 710 uses URL of document management system 110 to establish a connection between a user session of user 120a and document management system 110.

In step 830, document management system 110 sends to browser 710 data representing a login page of a portal of document management system 110.

In step 840, browser 710 displays a login page of a portal of document management system 110 of user 120a.

In step 850, user 120a enters authentication and authorization credentials to a login page of document management system 110, and in step 860, browser 710 submits the user credentials to document management system 110.

In step 870, document management system 110 uses the received credentials of user 120a to authenticate user 120a to document management system 110.

Upon a successful authentication of user 120a to document management system 110, in step 880, document management system 110 determines access rights of user 120a with respect to a shared document, retrieves the portions of the shared document that user 120a is allowed to review and/or modify, and transmits the portions to browser 710. If user 120a is allowed to review and modify the entire shared document, then the entire shared document is transmitted to user 120a. However, if user 120a is allowed to review or modify only certain portions of the shared document, then only those portions are transmitted to the user.

In step 882, browser 710 displays one or more portions of the shared document on a display device of user 120a.

In step 884, user 120a receives one or more portions of the shared document and views the displayed portions on a display device. User 120a may edit or otherwise modify the portions of the shared document. For example, user 120a may use a "track changes" tool to edit the content of a particular portion of the shared document, and save the modifications in a modification proposal for the particular portion. Alternatively, user 120a may use a text editor to edit a particular portion of the shared document. The text editor may allow user 120a to cross out the text that user 120a wishes to delete from the particular portion and to enter the new text that the user wishes to add to the particular document and that would appear in the particular portion as underlined. Other types of text editors and other methods of editing a document may also be used by user 120a. In step 886, browser 710 receives a request from user 120a to implement a modification proposal in a shared document. Browser 710 may transmit the request and the modification proposal to document management system 110.

In step 890, document management system 110 receives a request to implement a modification proposal in a shared document. Upon receiving the request, document management system 110 may generate a proposal identifier for the modification proposal, and update a metadata and history data database by including the modification proposal in the history data associated with the shared document.

Steps 810-890 may be performed and repeated each time user 120a wishes to review and modify a shared document. Furthermore, steps 810-890 may be performed and repeated each time user 120a wishes to review another shared document, or another portion of the shared document.

In an embodiment, proposed modifications are not immediately implemented in a shared document. Instead, document management system 110 includes a modification proposal received from user 120a (collaborator) in a history log (real-time log) associated with the shared document to indicate that the modification proposal has been received from user 120a. The log is updated by including information describing how user 120a wishes to modify the shared document, identification information of user 120a, timestamps associated with the submission of the modification proposal, and other information related to the proposal.

History logs associated with shared document may be reviewed by owners of the shared document. For example, as described in FIG. 7 (steps 754-766), owner 130a may request a history log for a shared document, review the modification proposals submitted for the shared document, determine which proposals are to be implemented in the shared document, and cause document management system 110 to initiate implementation of the selected modification proposals.

### 4.6 EXAMPLE DATA STRUCTURES

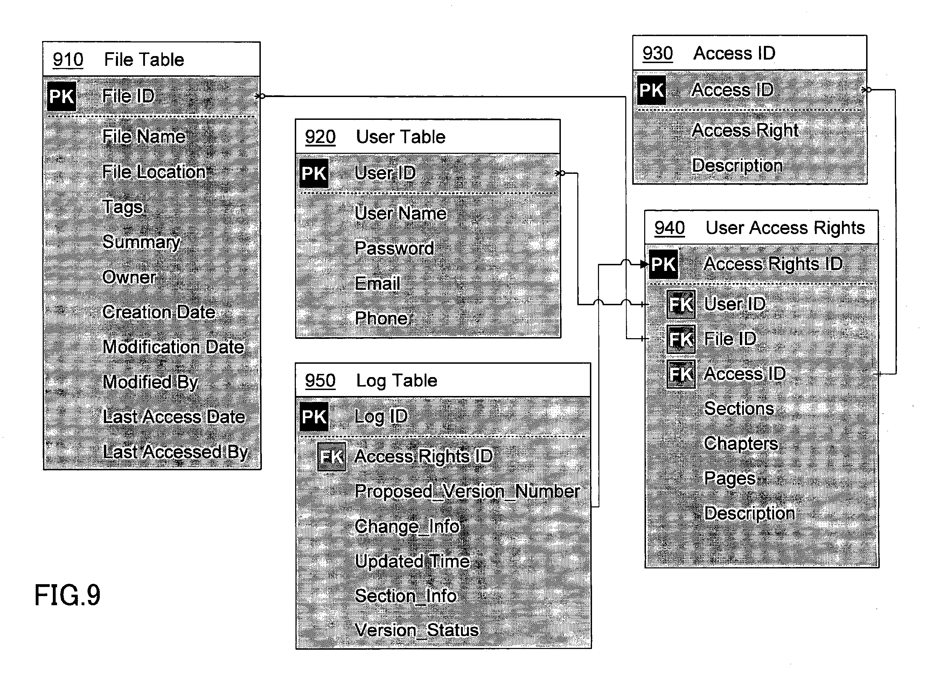

FIG. 9 is an example of data structures utilized in an approach for a document sharing and collaboration. The depicted data structures are merely examples of various types of data structures that may be implemented in the approach.

Data structures depicted in FIG. 9 include a file table 910, a user table 920, an access identifiers table 930, a user access rights table 940, and a log table 950. Other data structures, not depicted in FIG. 9, may also be used and implemented.

File table 910 may be implemented in a document database 160, depicted in FIG. 1. File table 910 may be used to store information about document data files of documents managed by a document management system. File table 910 may include data records for each document data file and may be searchable using search queries.

In an embodiment, file table 910 includes a plurality of data records for each of the document data files. A data record for a document data file of the document may include a plurality of fields. Non-limiting examples of the data fields include a file identifier (ID) field, a file name field, a file location field, a tag field, a summary field, an owner identifier field, a creation date field, a modification date field, an identifier of a user who modified the document, a last access date field, an identifier of a user who lastly accessed the document, and any other fields not depicted in file table 910. In some implementations, a record in file table 910 may comprise some of the above listed fields; in other implementations, a record in file table 910 may comprise additional data field.

User table 920 may be implemented in an identification and access rights database 140, depicted in FIG. 1. User table 920 may be used to store information about users who share and collaborate on shared documents. User table 920 may include data records for the owners of the shared documents and the user (collaborators) who review and modify the shared documents.

In an embodiment, user table 920 includes a plurality of data records for each of the user who accesses a shared document. A data record in user table 920 may include a plurality of fields. Non-limiting examples of the data fields include a user identifier field, a user name field, a user password field, a user email address field, a user phone number field, and any other fields not depicted in user table 920. In some implementations, a record in user table 920 may comprise some of the above listed fields; in other implementations, a record in user table 920 may comprise additional data field.

Access identifiers table 930 may be implemented in an identification and access rights database 140, depicted in FIG. 1. Access identifiers table 930 may be used to store access rights associated with shared documents. For example, access identifiers table 930 may include data records containing associations between an access right identifier, an access right type ("write," "read," "delete," or other), and a description of the access right.

In an embodiment, access identifiers table 930 includes a plurality of data records for each type of the access rights. A data record in access identifiers table 930 may include a plurality of fields. Non-limiting examples of the data fields include an access right identifier field, an access right type ("write," "read," "delete," "insert," or other), and a description of the access right. In some implementations, a record in access identifiers table 930 may comprise some of the above listed fields; in other implementations, a record in access identifiers table 930 may comprise additional data field.

User access rights table 940 may be implemented in an identification and access rights database 140, depicted in FIG. 1. User access rights table 940 may be used to store access rights associated with shared documents. For example, user access rights table 940 may include data records containing associations between an access right identifier, a user identifier of a user who was granted the access right, and identifiers of shared documents that the user may access.

In an embodiment, user access rights table 940 includes a plurality of data records for various types of access rights. A data record in access rights table 940 may include a plurality of fields. Non-limiting examples of the data fields include an access right identifier field, a user identifier of a user to whom the access right was granted, a document identifier of the shared document, an access identifier field, a section indicator field, a chapter indicator field, a page indicator field, a description field, and other fields not depicted in access rights table 940. For example, if a user 120a was granted a "write" access right to pages 1-5 of a shared document "A," then a record generated for such access rights may include the access right identifier indicating the "write" access right, a user identifier of user 120a, a file identifier of the shared document "A," and a page indicator indicating that user 120a may access pages 1-5 of shared document "A."

In some implementations, access rights table 940 may comprise some of the above listed fields; in other implementations, a record in access rights table 940 may comprise additional data field.

Log table 950 may be implemented in a metadata and history data database 150, depicted in FIG. 1. Log table 950 may be used to store modification proposal submitted by users who collaborate on a shared document. For example, log table 950 may include data records containing associations between log identifiers and the proposed modification to the shared document.

In an embodiment, log table 950 includes a plurality of data records indexed by log identifiers. A log identifier may be an alphanumeric string generated at the time a modification proposal is submitted to a document management system. A data record in log table 950 may include a plurality of fields. Non-limiting examples of the data fields include a log identifier field, an access rights identifier field, a proposed version number field, a changed information field, a timestamp of the modification field, a section information field, a version status field, and other fields not depicted in log table 950. In some implementations, a record in log table 950 may comprise some of the above listed fields; in other implementations, a record in log table 950 may comprise additional data field.

### 4.7 EXAMPLE USER INTERFACES

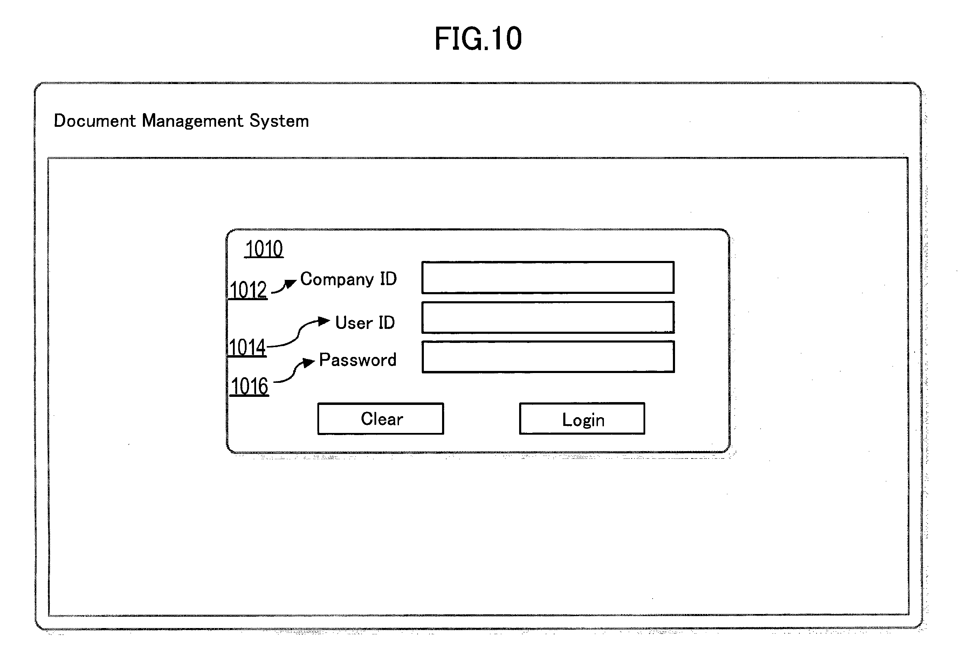

User interfaces depicted in FIGS. 10-13 are merely examples of interfaces that may be implemented in an approach for a document sharing and collaboration. Other types of interfaces, not depicted in FIGS. 10-13, may also be utilized in the approach.

FIG. 10 is an example of a user interface for accessing a document management system implementing a document sharing and collaboration. The depicted user interface may be used by an application hosting the document management system to allow users to access the system.

Using the depicted interface, in a text field portion 1010, a user may enter a company identifier in a company ID field 1012, a user identifier in a user ID field 1014, and a password in a password field 1016. Upon entering data in fields 1012-1016, the user may press a "login" button, and cause transmitting the entered data into the document management system.

If a user wishes to change any of the data entered in fields 1012-1016, then the user may clear the entries in fields 1012-1016 by pressing a "clear" button. Other designs and implementation of the user interface allowing the user to access a document management system may also be implemented.

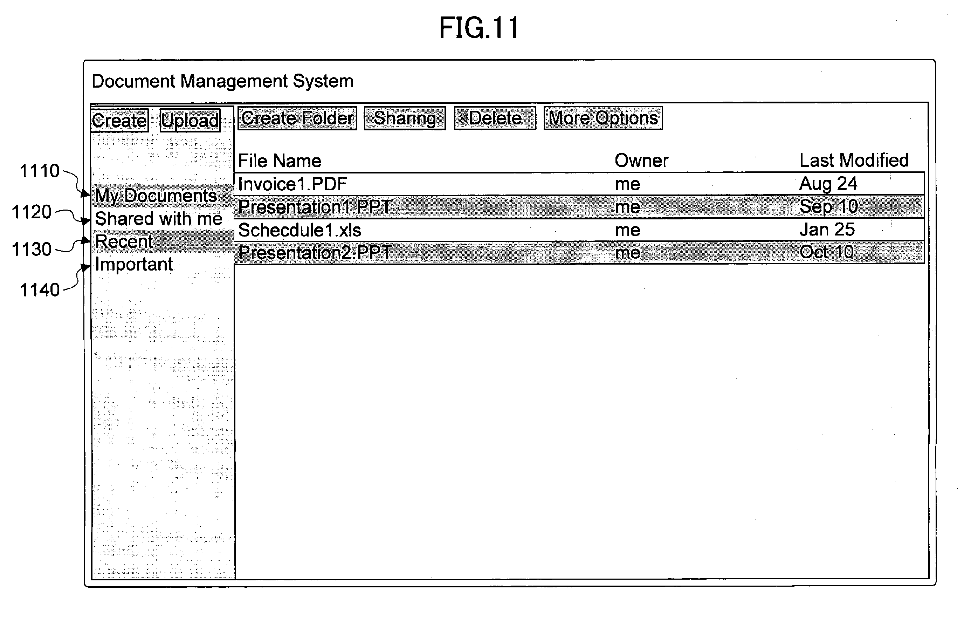

FIG. 11 is an example of a user interface for accessing documents managed by a document management system implementing a document sharing and collaboration. The depicted user interface may be used by an application hosting the document management system to allow users to determine documents to be shared with other users. Using the depicted interface, a user may create a document, identify a document that the user wishes to share with other users, upload a document, create a folder for storing documents, determine access rights for shared document and user who collaborate on the shared documents, delete a document, and perform other operations on data managed by the document management system.

In the example depicted in FIG. 11, a display depicts various menu selections, including create, upload, create folder, sharing, delete, and more options. A user may select the menu selection buttons, and initiate the respective functionality of the user interface. For example, upon selecting an upload button, a document management system may cause displaying on a user display device a list of files that the user owns. In the depicted example, a user selected a "My Documents" tab 1110, and obtained a display of the names of the documents that the user owns. In the depicted examples, the displayed names include "invoice1. PDF," "Presentation1. PDF," "Schedule1.xls," and Presentation2.PPT." For each of the documents, the document management system may display an indication that the user is an owner of the respective document, the date when the document was lastly modified, and any other document-related information. These documents may or may not be shared with other users.

A user may also select a "Shared with me" tab 1120, and obtain a display of the names of the documents that the user shares with other users.

A user may also select a "Recent" tab 1130, and obtain a display of the names of the documents that the user recently created, downloaded or reviewed.

A user may also select an "Important" tab 1140, and obtain a display of the names of the documents that the user marked as important.

Other designs and implementation of the user interface allowing the user to create, upload, create folder, sharing and delete documents managed by a document management system may also be implemented.

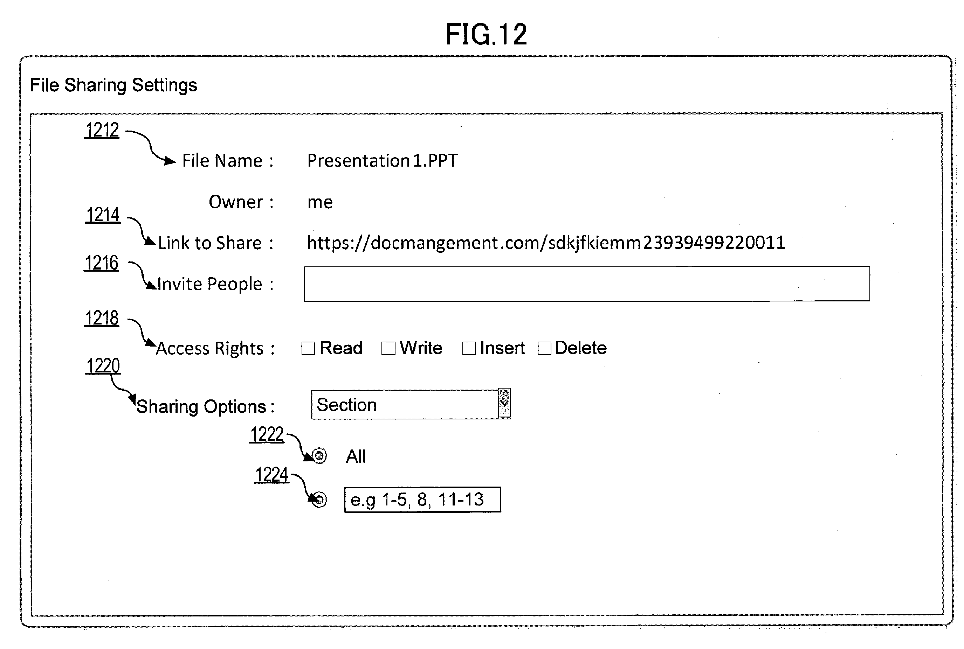

FIG. 12 is an example of a user interface for assigning access rights for documents managed by a document management system implementing a document sharing and collaboration. The depicted user interface may be used by an application hosting the document management system to allow users to assign access rights to a shared document. Using the depicted interface, a user may indicate a document to be shared, a link through which the shared document may be accessed, users who may collaborate on the shared document, rights that may be assigned to the shared document, and sections/chapters/pages of the shared document that the user may access.

The depicted example shows that a user selected a "Presentation1.PPT" document 1212, which he owns. The user also specified a link 1214 through which the Presentation1.PPT document may be accessed. The user may also enter user identifiers 1216 of the users who may collaborate on the shared document, and may specify which of the access rights 1218, such as "read," "write," "insert," or "delete" rights, the collaborators may have. Furthermore, the user may specify whether the collaborators may have access to the entire shared document, certain sections of the document, certain chapters of the document, or certain pages. For example, the user may select a button labelled by "All" 1222, and thus allow the collaborators to access the entire shared document. However, the user may also select a "Sharing Options" 1220, and specify that the collaborators may access certain sections, which may be itemized in a text field 1224.

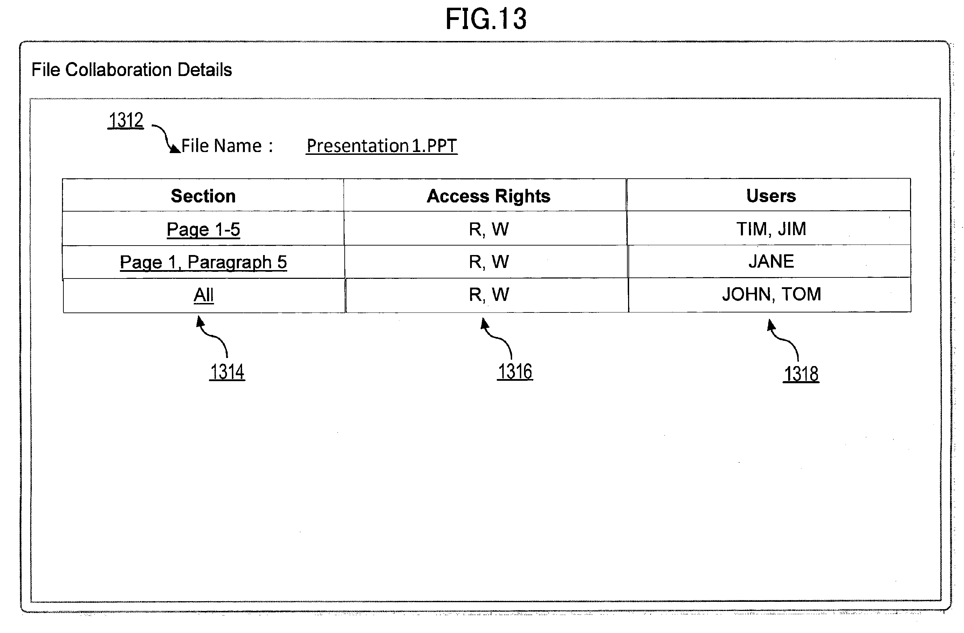

FIG. 13 is an example of a user interface for displaying file collaboration details for a shared document. The depicted user interface may be used by an application hosting the document management system to allow users to view access rights assigned to shared documents. The depicted display shows that a user selected a "Presentation1.PPT" document 1312, and obtained various types of information specific to that document. For example, the display may show sections 1314 to which users 1318 may have assigned certain types of rights 1316. In the depicted example, users Tim and Jim have "read" and "write" access to pages 1-5 of Presentation1.PPT document, user Jane has "read" and "write" rights to the fifth paragraph on page 1 of the document, and users John and Tom have "read" and "write" rights to the entire document. Other implementation of the user interface may provide displays of additional information related to shared documents.

In an embodiment, an approach for document sharing and collaboration allows managing documents shared among multiple users. The users who share a document may have access to the entire shared document or to portions of the document. The users may submit modification proposals to the shared document, and an owner of the document may decide which of the proposals are to be implemented in the shared document.

A document management system manages and tracks revisions of the document and authorship of the revisions. The document management system initiates implementation of modification proposals approved by an owner of a shared document. The document management system also manages reverting of the already implemented modifications, and implementing new modifications in the shared document. Furthermore, the document management system maintains various database configured for storing data used to manage the documents, modifications and access rights.

### 5.0 IMPLEMENTATION MECHANISMS

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

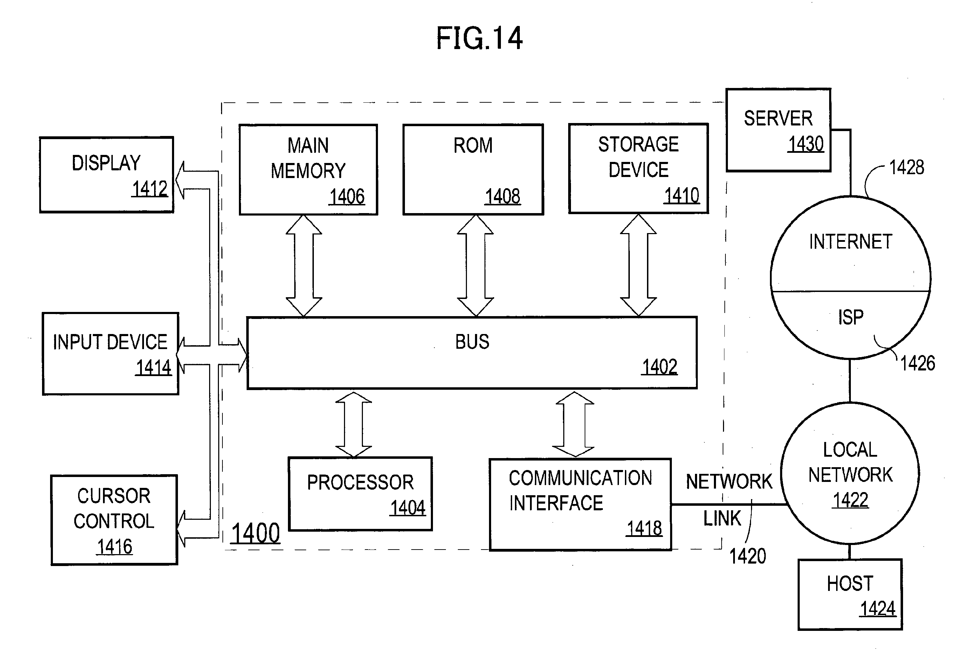

For example, FIG. 14 is a block diagram that illustrates a computer system 1400 upon which the embodiments may be implemented. Computer system 1400 includes a bus 1402 or other communication mechanism for communicating information, and a hardware processor 1404 coupled with bus 1402 for processing information. Hardware processor 1404 may be, for example, a general purpose microprocessor.

Computer system 1400 also includes a main memory 1406, such as a random access memory (RAM) or other dynamic storage device, coupled to bus 1402 for storing information and instructions to be executed by processor 1404. Main memory 1406 also may be used for storing temporary variables or other intermediate information during execution of instructions to be executed by processor 1404. Such instructions, when stored in non-transitory storage media accessible to processor 1404, render computer system 1400 into a special-purpose machine that is customized to perform the operations specified in the instructions.

Computer system 1400 further includes a read only memory (ROM) 1408 or other static storage device coupled to bus 1402 for storing static information and instructions for processor 1404. A storage device 1410, such as a magnetic disk or optical disk, is provided and coupled to bus 1402 for storing information and instructions.

Computer system 1400 may be coupled via bus 1402 to a display 1412, such as a cathode ray tube (CRT), for displaying information to a computer user. An input device 1414, including alphanumeric and other keys, is coupled to bus 1402 for communicating information and command selections to processor 1404. Another type of user input device is cursor control 1416, such as a mouse, a trackball, or cursor direction keys for communicating direction information and command selections to processor 1404 and for controlling cursor movement on display 1412. This input device typically has two degrees of freedom in two axes, a first axis (e.g., x) and a second axis (e.g., y), that allows the device to specify positions in a plane.

Computer system 1400 may implement the techniques described herein using customized hard-wired logic, one or more ASICs or FPGAs, firmware and/or program logic which in combination with the computer system causes or programs computer system 1400 to be a special-purpose machine. According to one embodiment, the techniques herein are performed by computer system 1400 in response to processor 1404 executing one or more sequences of one or more instructions contained in main memory 1406. Such instructions may be read into main memory 1406 from another storage medium, such as storage device 1410. Execution of the sequences of instructions contained in main memory 1406 causes processor 1404 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 1410. Volatile media includes dynamic memory, such as main memory 1406. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 1402. Transmission media can also take the form of acoustic or light waves, such as those generated during radio-wave and infra-red data communications.

Various forms of media may be involved in carrying one or more sequences of one or more instructions to processor 1404 for execution. For example, the instructions may initially be carried on a magnetic disk or solid state drive of a remote computer. The remote computer can load the instructions into its dynamic memory and send the instructions over a telephone line using a modem. A modem local to computer system 1400 can receive the data on the telephone line and use an infra-red transmitter to convert the data to an infra-red signal. An infra-red detector can receive the data carried in the infra-red signal and appropriate circuitry can place the data on bus 1402. Bus 1402 carries the data to main memory 1406, from which processor 1404 retrieves and executes the instructions. The instructions received by main memory 1406 may optionally be stored on storage device 1410 either before or after execution by processor 1404.

Computer system 1400 also includes a communication interface 1418 coupled to bus 1402. Communication interface 1418 provides a two-way data communication coupling to a network link 1420 that is connected to a local network 1422. For example, communication interface 1418 may be an integrated services digital network (ISDN) card, cable modem, satellite modem, or a modem to provide a data communication connection to a corresponding type of telephone line. As another example, communication interface 1418 may be a local area network (LAN) card to provide a data communication connection to a compatible LAN. Wireless links may also be implemented. In any such implementation, communication interface 1418 sends and receives electrical, electromagnetic or optical signals that carry digital data streams representing various types of information.

Network link 1420 typically provides data communication through one or more networks to other data devices. For example, network link 1420 may provide a connection through local network 1422 to a host computer 1424 or to data equipment operated by an Internet Service Provider (ISP) 1426. ISP 1426 in turn provides data communication services through the world wide packet data communication network now commonly referred to as the "Internet" 1428. Local network 1422 and Internet 1428 both use electrical, electromagnetic or optical signals that carry digital data streams. The signals through the various networks and the signals on network link 1420 and through communication interface 1418, which carry the digital data to and from computer system 1400, are example forms of transmission media.

Computer system 1400 can send messages and receive data, including program code, through the network(s), network link 1420 and communication interface 1418. In the Internet example, a server 1430 might transmit a requested code for an application program through Internet 1428, ISP 1426, local network 1422 and communication interface 1418.

The received code may be executed by processor 1404 as it is received, and/or stored in storage device 1410, or other non-volatile storage for later execution.

In the foregoing specification, the embodiments have been described with reference to numerous specific details that may vary from implementation to implementation. The specification and drawings are, accordingly, to be regarded in an illustrative rather than a restrictive sense. The sole and exclusive indicator of the scope of the embodiments, and what is intended by the applicants to be the scope of the embodiments, is the literal and equivalent scope of the set of claims that issue from this application, in the specific form in which such claims issue, including any subsequent correction.

The present application is based on and claims the benefit of priority of US Application No. 14/194,302 filed on February 28, 2014.

## Claims

1. A document management system (110), comprising:
one or more processors (1404); and
one or more memories (1406) storing instructions which, when processed by the one or more processors, cause:
sending, to an owner of a document, proposed modification data for the document;
wherein the proposed modification data comprises one or more modification proposals suggested for a particular portion of the document;
receiving, from the owner, an approval message for a first modification proposal, from the one or more modification proposals;
in response to receiving the approval message:
generating a modified document by modifying, based on the first modification proposal, the particular portion of the document; storing the modified document as a new version of the document; and generating history data by:
including the first modification proposal in the history data as an implemented modification; and
in response to determining that the one or more modification proposals comprise one or more modifications other than the first modification proposal, including the one or more modifications in the history data as non-implemented modifications.

2. The document management system of Claim 1, wherein the one or more memories store additional instructions which, when processed by the one or more processors, cause:
receiving, from the owner, a rejection message for a second modification proposal, from the one or more modification proposals; and
in response to receiving the rejection message, modifying the history data by indicating that the second modification proposal is a non-implemented modification.

3. The document management system of Claim 1, wherein the one or more memories store additional instructions which, when processed by the one or more processors, cause:
receiving, from the owner, a reconsideration message for the particular portion of the document;
wherein the reconsideration message comprises a reconsidered modification proposal selected from the history data, and marked as a non-implemented modification; and
in response to receiving the reconsideration message:
determining whether the history data comprises one or more modifications marked as the implemented modifications;
in response to determining that the history data comprises one or more modifications marked as the implemented modifications, reversing implementations of the one or more modifications for the particular portion of the new version of the document, and modifying the history data by marking the one or more modifications as the non-implemented modifications;
modifying the particular portion of the new version of the document according to the reconsidered modification proposal;
storing the modified new version of the document as another version of the document; and
modifying the history data by marking the reconsidered modification proposal as the implemented modifications.

4. The document management system of Claim 1, wherein the one or more memories store additional instructions which, when processed by the one or more processors, cause:
receiving, from an non-owner of the document, a user modification proposal for the particular portion of the document; and
in response to receiving the user modification proposal for the particular portion of the document, including the user modification proposal in the proposed modification data.

5. The document management system of Claim 1, wherein the one or more memories store additional instructions which, when processed by the one or more processors, cause:
receiving, from the owner, a metadata request for providing metadata for the document;
wherein the metadata comprises file identification data and user access rights data associated with the document; and
in response to receiving the metadata request, sending the metadata for the document to the owner.

6. The document management system of Claim 5, wherein the one or more memories store additional instructions which, when processed by the one or more processors, cause:
receiving, from the owner, a first metadata-update message;
wherein the first metadata-update message comprises file identification data modifications for the file identification data associated with the document; and
in response to receiving the first metadata-update message, using the file identification data modification to modify the file identification data included in the metadata.

7. The document management system of Claim 6, wherein the one or more memories store additional instructions which, when processed by the one or more processors, cause:
receiving, from the owner, a second metadata-update message;
wherein the second metadata-update message comprises user access rights modifications for the user access rights data associated with the document; and
in response to receiving the second metadata-update message, using the user access rights modifications to modify the user access rights data included in the metadata.

8. A non-transitory computer-readable storage medium (1410) storing one or more instructions which, when processed by one or more processors (1404), cause the one or more processors to perform:
sending, to an owner of a document, proposed modification data for the document;
wherein the proposed modification data comprises one or more modification proposals suggested for a particular portion of the document;
receiving, from the owner, an approval message for a first modification proposal, from the one or more modification proposals;
in response to receiving the approval message:
generating a modified document by modifying, based on the first modification proposal, the particular portion of the document;
storing the modified document as a new version of the document; and
generating history data by:
including the first modification proposal in the history data as an implemented modification; and
in response to determining that the one or more modification proposals comprise one or more modifications other than the first modification proposal, including the one or more modifications in the history data as non-implemented modifications.

9. The non-transitory computer-readable storage medium of Claim 8, storing additional instructions which, when processed by the one or more processors, cause the one or more processors to perform:
receiving, from the owner, a rejection message for a second modification proposal, from the one or more modification proposals; and
in response to receiving the rejection message, modifying the history data by indicating that the second modification proposal is a non-implemented modification.

10. The non-transitory computer-readable storage medium of Claim 8, storing additional instructions which, when processed by the one or more processors, cause the one or more processors to perform:
receiving, from the owner, a reconsideration message for the particular portion of the document;
wherein the reconsideration message comprises a reconsidered modification proposal selected from the history data, and marked as a non-implemented modification; and
in response to receiving the reconsideration message:
determining whether the history data comprises one or more modifications marked as the implemented modifications;
in response to determining that the history data comprises one or more modifications marked as the implemented modifications, reversing implementations of the one or more modifications for the particular portion of the new version of the document, and modifying the history data by marking the one or more modifications as the non-implemented modifications;
modifying the particular portion of the new version of the document according to the reconsidered modification proposal;
storing the modified new version of the document as another version of the document; and
modifying the history data by marking the reconsidered modification proposal as the implemented modifications.

11. The non-transitory computer-readable storage medium of Claim 8, storing additional instructions which, when processed by the one or more processors, cause the one or more processors to perform:
receiving, from an non-owner of the document, a user modification proposal for the particular portion of the document; and
in response to receiving the user modification proposal for the particular portion of the document, including the user modification proposal in the proposed modification data.

12. The non-transitory computer-readable storage medium of Claim 8, storing additional instructions which, when processed by the one or more processors, cause the one or more processors to perform: receiving, from the owner, a metadata request for providing metadata for the document;
wherein the metadata comprises file identification data and user access rights data associated with the document; and
in response to receiving the metadata request, sending the metadata for the document to the owner.

13. The non-transitory computer-readable storage medium of Claim 12, storing additional instructions which, when processed by the one or more processors, cause the one or more processors to perform:
receiving, from the owner, a first metadata-update message;
wherein the first metadata-update message comprises file identification data modifications for the file identification data associated with the document; and
in response to receiving the first metadata-update message, using the file identification data modification to modify the file identification data included in the metadata.

14. The non-transitory computer-readable storage medium of Claim 13, storing additional instructions which, when processed by the one or more processors, cause the one or more processors to perform:
receiving, from the owner, a second metadata-update message;
wherein the second metadata-update message comprises user access rights modifications for the user access rights data associated with the document; and
in response to receiving the second metadata-update message, using the user access rights modifications to modify the user access rights data included in the metadata.

15. A method comprising:
sending, to an owner of a document, proposed modification data for the document;
wherein the proposed modification data comprises one or more modification proposals suggested for a particular portion of the document;
receiving, from the owner, an approval message for a first modification proposal, from the one or more modification proposals;
in response to receiving the approval message:
generating a modified document by modifying, based on the first modification proposal, the particular portion of the document;
storing the modified document as a new version of the document; and
generating history data by:
including the first modification proposal in the history data as an implemented modification; and
in response to determining that the one or more modification proposals comprise one or more modifications other than the first modification proposal, including the one or more modifications in the history data as non-implemented modifications;
wherein the method is performed using one or more computing devices.
